# FASCICULE DE BREVET EUROPEEN

(11) **EP 3 887 247 B1**
(45) Date de publication et mention de la délivrance du brevet: **21.10.2026**
(21) Numéro de dépôt: 19835699.0
(22) Date de dépôt: 29.11.2019
(51) Int. Cl.: F04D 27/02, F02C 9/18, F01D 11/00, F16J 15/02

(54) **JOINT D'ETANCHÉITÉ POUR PORTE DE VANNE DE DÉCHARGE D'UNE TURBOMACHINE**
DICHTUNG FÜR EINE ABLAUFVENTILKLAPPE EINER TURBOMASCHINE
SEAL FOR A DISCHARGE VALVE DOOR OF A TURBOMACHINE

(30) Priorité: 29.11.2018 FR 1872063
(43) Date de publication de la demande: 06.10.2021
(73) Titulaire: SAFRAN AIRCRAFT ENGINES, 75015 Paris (FR)
(72) Inventeur: TESSIEREAU, Antonin Etienne Diego, 77550 Moissy Cramayel (FR); GODIN, Florent Robert André, 77550 Moissy Cramayel (FR); JACON, Bruno Alexandre Didier, 77550 Moissy Cramayel (FR)
(74) Mandataire: Cabinet Camus Lebkiri
(86) Numéro de dépôt international: PCT/FR2019/052839
(87) Numéro de publication internationale: WO 2020/109738

(56) Documents cités:
- CA-A1- 2 696 837
- CA-A1- 2 696 837
- FR-A1- 2 939 835
- US-A1- 2003 006 563
- US-A1- 2016 194 971
- US-A1- 2016 194 971

## Description

### DOMAINE TECHNIQUE DE L'INVENTION

Le domaine de l'invention est celui des vannes de décharge de carter de turbomachine, et notamment de carter intermédiaire de turbomachine.

L'invention se rapporte plus particulièrement à un joint d'étanchéité d'une porte de vanne de décharge de turbomachine, et à une vanne de décharge de turbomachine comportant un tel joint d'étanchéité.

### ETAT DE LA TECHNIQUE ANTERIEURE

Les vannes de décharge, également connues sous leur acronyme VDV pour Vanne à Décharge Variable (ou encore VBV pour Variable Bleed Valves en langue anglaise) sont généralement montées sur le moyeu d'un carter intermédiaire d'une turbomachine à double flux, positionné entre le compresseur basse-pression et le compresseur haute-pression. Les vannes de décharge sont positionnées dans un espace annulaire inter-veine du moyeu du carter intermédiaire s'étendant entre une veine d'écoulement principale (veine primaire) dans laquelle circule un flux d'air primaire et une veine d'écoulement secondaire (veine secondaire) dans laquelle circule un flux d'air secondaire.

Ces vannes de décharge sont régulièrement réparties sur le moyeu du carter intermédiaire autour de l'axe longitudinal de la turbomachine et comprennent chacune une porte montée pivotante autour d'un axe, de manière à être déplaçable angulairement par rapport au carter intermédiaire, entre une position d'obturation dans laquelle la porte obture un orifice de passage d'air ménagé dans le moyeu du carter intermédiaire et une position d'ouverture de cet orifice.

Les vannes de décharge assurent donc l'étanchéité entre la veine primaire et la veine secondaire dans leur position d'obturation et permettent l'évacuation d'une partie du flux d'air primaire hors de la veine primaire dans certaines conditions de fonctionnement dans leur position d'ouverture. La partie du flux d'air primaire prélevée est soit réinjectée dans le flux d'air secondaire, soit utilisée pour alimenter des systèmes de refroidissement ou pour ventiler des composants de la turbomachine.

Pour assurer l'étanchéité entre la veine primaire et la veine secondaire, les portes des vannes de décharge présentent un joint d'étanchéité, par exemple en élastomère, s'étendant sur le pourtour des bords périphériques de chaque porte. Le joint d'étanchéité est destiné à venir en appui, dans la position de fermeture de la vanne de décharge, contre la paroi du carter intermédiaire bordant l'orifice de passage d'air.

Il est connu différents types de joint ainsi que différentes techniques de fixation du joint d'étanchéité sur le pourtour des portes des vannes de décharge.

Le document FR2923541 décrit un exemple de réalisation d'un joint d'étanchéité, selon l'état de la technique. Le joint d'étanchéité comprend une partie plane s'étendant sur la face externe des parties périphériques de la porte, qui est maintenue serrée sur cette porte par une plaque de fixation, et une partie bombée formant un bourrelet (ou encore un boudin) et qui s'étend autour des bords périphériques de la porte de manière à venir en appui sur le pourtour de l'orifice de passage d'air du carter intermédiaire lorsque la vanne de décharge est dans sa position de fermeture.

Toutefois, dans certaines situations et conditions d'utilisation, et notamment lorsque la pression du flux d'air primaire est importante (par exemple au-delà d'une pression de 2 bars), les niveaux de fuites constatés en position d'obturation avec ce type de joint à bourrelet, ou à boudin, sont trop importants et difficilement acceptables.

Par conséquent, pour remédier à cet inconvénient, et pour améliorer l'efficacité d'étanchéité d'une vanne à décharge dans ces situations particulières, il a été développé des vannes de décharge munies d'un joint à lèvre monté sur le pourtour des portes des vannes de décharge, l'étanchéité étant assurée par la lèvre du joint venant en appui sur le pourtour de l'orifice du passage d'air du carter intermédiaire.

De par sa relative souplesse, ce type de joint présente l'avantage de réaliser une bonne étanchéité lors de la première fermeture de la porte et lors de la mise en pression de la veine primaire. Ce type de joint permet également de ne pas nécessiter un effort de contact trop important, évitant ainsi une sollicitation importante des vérins hydrauliques et des mécanismes de commande de fermeture du système de décharge.

Toutefois, il a été constaté que la lèvre du joint d'étanchéité avait tendance à se retourner en position d'ouverture, notamment sous l'effet du débit de décharge entre la veine primaire et la veine secondaire. Ce retournement de la lèvre a pour conséquence un mauvais repositionnement de celle-ci lors de la fermeture de la porte, et notamment dès qu'intervient une deuxième cinématique d'ouverture/fermeture. La lèvre ainsi retournée ne revient pas en position d'origine et ne réalise plus une étanchéité satisfaisante, occasionnant des fuites, en position fermée, qui peuvent être problématiques, car à l'origine d'une surconsommation ou d'une diminution des performances de la turbomachine.

De plus, il a été constaté que l'utilisation de ce type de joint à lèvre rend difficile le pilotage de l'ouverture de la vanne de décharge. En effet, ce type de joint à lèvre occasionne une décharge instantanée et importante entre le moment où la lèvre du joint est encore en contact avec la paroi du carter intermédiaire (débit de fuite égal à zéro) et le moment où il n'y a plus de contact entre la lèvre et la paroi du carter intermédiaire (décharge de la veine primaire). De plus, ce type de joint à lèvre occasionne une zone morte. Cette zone mode résulte d'un débit nul de décharge alors que la modification angulaire de la vanne de décharge se produit, compromettant le bon fonctionnement de la turbomachine, pour finir par la décharge brutale de l'air lorsque la lèvre ne peut plus assurer la fonction d'étanchéité.

Par conséquent, ce type de joint à lèvre ne permet pas de réaliser un pilotage fin des vannes de décharge. D'autres joints d'étanchéité similaires sont connus de US 2016/194 971, CA 2 696 837 et FR 2 939 835.

### EXPOSE DE L'INVENTION

Dans ce contexte, l'invention vise à proposer une solution permettant de résoudre ces inconvénients.

A cette fin, l'invention concerne un joint d'étanchéité suivant la revendication 1.

Le joint d'étanchéité selon l'invention peut également présenter une ou plusieurs des caractéristiques ci-dessous, considérées individuellement ou selon toutes les combinaisons techniquement possibles :
- les moyens anti-retournement forment une butée pour limiter la déformation élastique de la portion courbée de la charnière lorsque le joint d'étanchéité est soumis à une pression d'air afin d'augmenter le contact et donc l'étanchéité;
- les moyens anti-retournement sont formés par un bourrelet de matière ;
- les moyens d'accroche pour monter ledit joint sur ledit premier organe comporte des fibres de renforcement enrobées d'un matériau élastomère et de silicone; les fibres de renforcement sont par exemple en verre ou en polyester,
- la lèvre d'étanchéité est revêtue d'un tissu antifriction, préférentiellement en polyester ou en méta-aramide.

L'invention a également pour objet une porte de vanne de décharge de turbomachine comportant un bord périphérique, caractérisée en ce qu'elle comporte un joint d'étanchéité monté sur ledit bord périphérique via les moyens d'accroche.

L'invention a également pour objet une vanne de décharge de turbomachine comportant une porte selon l'invention montée pivotante autour d'un axe de rotation entre une position d'obturation d'un orifice de passage d'air et une position d'ouverture de cet orifice.

L'invention a également pour objet un carter intermédiaire comportant une pluralité de vanne de décharge selon l'invention assurant l'étanchéité au niveau d'une pluralité d'orifice de passage d'air.

Avantageusement, le carter intermédiaire comporte un mécanisme de commande de vannes de décharge.

L'invention a également pour objet une turbomachine comportant un compresseur basse-pression, un compresseur haute-pression et un carter intermédiaire selon l'invention positionné longitudinalement entre le compresseur basse-pression et le compresseur haute-pression.

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention ressortiront à la lecture de la description qui suit, en référence aux figures annexées, qui illustrent :
- la figure 1 illustre schématiquement, en coupe axiale, une turbomachine à double flux selon l'invention ;
- la figure 2 est une vue simplifiée d'un carter intermédiaire de turbomachine présentant des vannes de décharge selon l'invention ;
- la figure 3 est une vue schématique en coupe d'une portion d'une vanne de décharge de turbomachine comportant un joint d'étanchéité selon l'invention ;
- la figure 4 est une vue simplifiée en coupe d'une portion d'une vanne de décharge de turbomachine illustrant le comportement du joint d'étanchéité selon l'invention en position de fermeture ;
- la figure 5 est une vue schématique en coupe d'une portion d'une vanne de décharge de turbomachine illustrant le comportement du joint d'étanchéité selon l'invention en position de fermeture lorsque la veine primaire est sous pression ;
- la figure 6 est une vue schématique en coupe d'une portion d'une vanne de décharge de turbomachine illustrant le comportement du joint d'étanchéité selon l'invention lors du débit de l'ouverture de la porte ;
- la figure 7 est une vue schématique en coupe d'une portion d'une vanne de décharge de turbomachine illustrant le comportement du joint d'étanchéité selon l'invention lorsque la porte est totalement ouverte.

Pour plus de clarté, les éléments identiques ou similaires sont repérés par des signes de référence identiques sur l'ensemble des figures.

### DESCRIPTION DETAILLEE D'UN MODE DE REALISATION

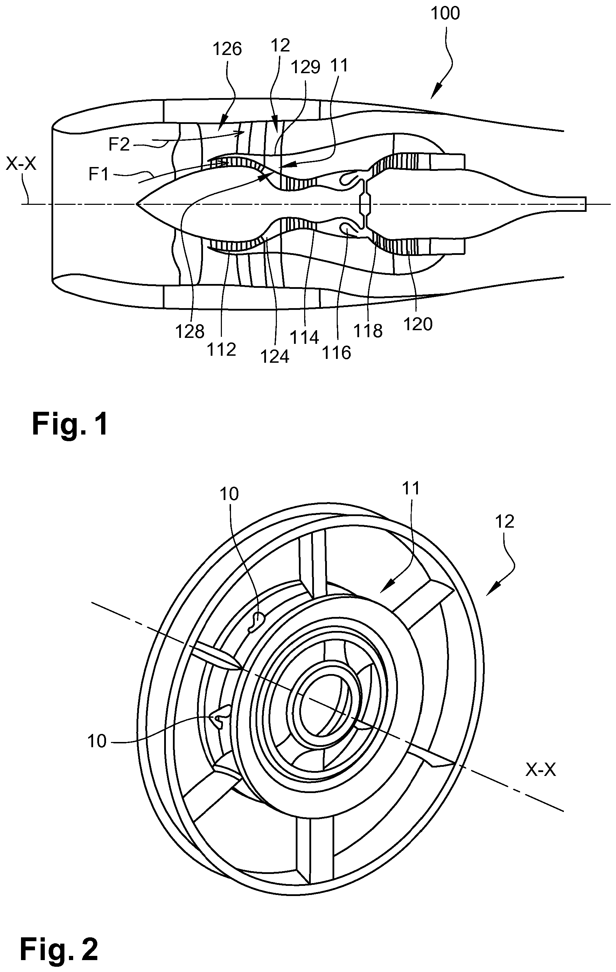

La figure 1 illustre schématiquement, en coupe axiale, une turbomachine à double flux.

Une telle turbomachine 100 comporte, de l'amont vers l'aval selon la direction d'écoulement des gaz, un compresseur basse pression 112, un compresseur haute pression 114, une chambre de combustion 116, une turbine haute pression 118 et une turbine basse pression 120. La turbine haute pression 118 est solidaire du compresseur haute pression 114 de manière à former un corps haute pression, tandis que la turbine basse pression 120 est solidaire du compresseur basse pression 112 de manière à former un corps basse pression, de sorte que chaque turbine entraîne le compresseur associé en rotation autour de l'axe X-X de la turbomachine 100 sous l'effet de la poussée des gaz provenant de la chambre de combustion 116.

Dans une telle turbomachine 100, un carter intermédiaire 12 est interposé entre le compresseur basse pression 112, situé en amont, et le compresseur haute pression 114, situé en aval.

La figure 2 représente une vue simplifiée d'un carter intermédiaire 12 sur lequel des vannes de décharge 10 sont montées au niveau du moyeu 11 du carter intermédiaire 12.

Le carter intermédiaire 12 a une forme générale cylindrique ou tronconique. Le moyeu 11 comprend deux viroles annulaires coaxiales, respectivement interne 128 et externe 129 ; reliées mutuellement par un flasque transversal amont et par un flasque transversal aval. Le flasque amont est agencé en aval du compresseur basse pression 112 tandis que le flasque aval est agencé en amont du compresseur haute pression 114. Le compresseur haute pression 114 comprend généralement une succession de rotors et de stators à calage variable, permettant de contrôler le débit de l'air le traversant.

La virole annulaire interne 128 délimite la partie externe par rapport à l'axe X-X de l'espace d'écoulement primaire, ou veine primaire 124, du flux primaire F1 de la turbomachine et comporte des orifices 14 d'entrée d'air de décharge répartis circonférentiellement autour d'un axe de révolution du carter intermédiaire 12, cet axe étant confondu avec l'axe X-X de rotation de la turbomachine.

Chacun des orifices 14 d'entrée d'air de décharge, de forme sensiblement parallélépipédique, est associé à une vanne de décharge 10 destinée à la régulation du débit du compresseur haute pression 114. La virole annulaire externe 129 délimite, quant à elle, la partie interne par rapport à l'axe X-X de l'espace d'écoulement secondaire, veine secondaire 126, du flux secondaire F2, et comporte des orifices de sortie d'air agencés en aval du flasque transversal aval et répartis circonférentiellement autour de l'axe X-X.

Le moyeu 11 du carter intermédiaire 12 comprend par exemple douze orifices d'entrée 14 régulièrement répartis autour de l'axe longitudinal de la turbomachine X-X, et de manière complémentaire douze vannes de décharge 10.

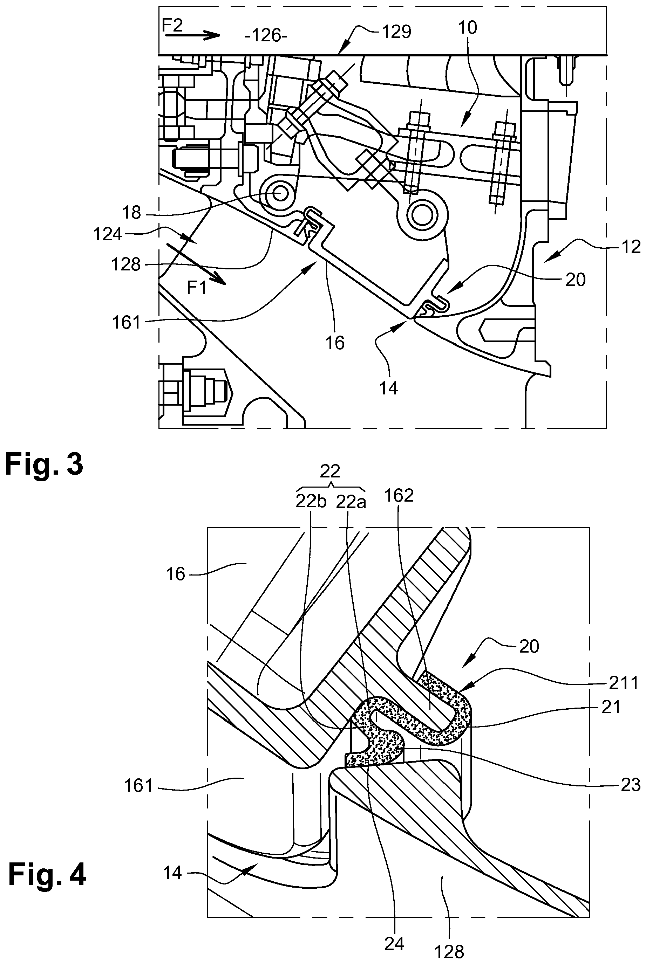

La figure 3 représente de manière plus précise une portion d'une vanne de décharge 10 d'un carter intermédiaire 12 de turbomachine 100 selon l'invention.

Chaque vanne de décharge 10 du carter intermédiaire 12 comporte une porte 16 qui a une forme sensiblement parallélépipédique complémentaire de celle de l'orifice 14 d'entrée d'air de décharge correspondant. La porte 16 a pour fonction d'assurer une étanchéité entre le flux primaire F1 et le flux secondaire F2 et d'autoriser un débit de décharge entre le flux primaire F1 et le flux secondaire F2 en fonction d'un programme de pilotage de la vanne de décharge 10.

La porte 16 est par exemple fabriquée par injection de matériau plastique approprié, comme par exemple un matériau thermoplastique du type PEEK (polyétheréthercétone) ou ULMET^{®} (polyétherimide). Le matériau de la porte 16 peut également être renforcé de fibres, telles que des fibres de verre.

La vanne de décharge 10 comporte également des moyens de pivotement 18 pour faire pivoter la porte 16 autour d'un axe transversal qui est sensiblement tangent au carter intermédiaire 12 et qui s'étend sensiblement selon le long du bord périphérique amont de la porte 16.

La porte 16 est donc mobile angulairement par pivotement autour de l'axe transversal entre une position de fermeture, dans laquelle la surface intérieure 161 de la porte 16 est alignée avec la surface de la virole annulaire interne 128 du carter intermédiaire 12, et une position d'ouverture de cet orifice 14 dans laquelle la porte 16 est inclinée selon un angle de 60° environ vers l'intérieur de la cavité du moyeu 11 du carter intermédiaire 12 par rapport à sa position de fermeture.

De manière à assurer l'étanchéité de la veine primaire 124 dans la position de fermeture de la vanne de décharge 10, celle-ci comporte un joint d'étanchéité 20 s'étendant le long des bords périphériques 162 (latéraux, amont et aval) de la porte 16.

Un exemple de réalisation d'un joint d'étanchéité 20 monté sur une porte 16 de vanne de décharge 10 est représenté partiellement en vue en coupe à la figure 4.

La figure 4 est une vue simplifiée en coupe d'une portion d'une vanne de décharge de turbomachine illustrant le comportement du joint d'étanchéité selon l'invention en position de fermeture.

Le joint d'étanchéité 20 comporte une première partie 21 présentant une forme configurée pour permettre un emboitement autour des bords périphériques 162 de la porte 16. La première partie 21 forme ainsi les moyens d'accroche du joint d'étanchéité 20 permettant son maintien sur la porte 16.

La première partie 21 présente une forme générale en U. Cette première partie 21 en U est destinée à venir s'emboiter autour des bords périphériques 162 de la porte 16 et forme les moyens d'accroche du joint d'étanchéité 20 à la porte 16. Le joint d'étanchéité 20 est donc maintenu sur la porte 16 par emboîtement puis éventuellement collage de la première partie 21 en U sur les bords périphériques 162 de la porte 16.

Avantageusement, le joint d'étanchéité 20 est collé sur les bords périphériques 162 de la porte 16, via cette première partie 21 en U.

Dans la continuité de cette première partie 21 en U (i.e. en se dirigeant vers la veine primaire), le joint d'étanchéité 20 comporte une zone de matière formant une charnière 22, présentant également une forme générale en C, dont le sens de la courbure est inversé par rapport à la première partie 21, de sorte que ces deux parties 21, 22 combinées présentent une forme générale de S inversée.

La charnière 22 comporte, dans la continuité de la première partie 21 en U, une première portion 22a courbée formant un retour et une deuxième portion 22b sensiblement rectiligne et orientée sensiblement parallèlement à la surface extérieure 211 du joint d'étanchéité 20 (au moins dans sa position nominale, i.e. sans mise en pression de la veine primaire 124). La première portion 22a courbée forme un point de pivot du joint d'étanchéité 20 configuré pour se déformer lors de la mise en pression de la veine primaire 124.

Dans la continuité de la charnière 22, le joint d'étanchéité 20 comporte une lèvre d'étanchéité 24, présentant des dimensions plus petites que la charnière 22. La lèvre d'étanchéité 24 est une lèvre souple destinée à venir en contact avec la paroi interne de la virole annulaire interne 128 du carter intermédiaire 12 de manière à assurer une étanchéité à l'air entre la veine primaire 124 et la veine secondaire 126.

A la base de la lèvre d'étanchéité 24, i.e. à l'opposé de son extrémité libre, le joint d'étanchéité 20 comporte un moyen « anti-retournement » de la lèvre d'étanchéité 24 configuré pour renforcer la structure du joint 20 au niveau de la base de la lèvre d'étanchéité 24.

Selon un exemple de réalisation, le moyen anti-retournement est formée par une portion courbée 23 présentant une forme générale en C ou en V, (l'intérieur de la courbure étant dirigé vers le flux d'air sous pression venant de la veine primaire 124) dont l'épaisseur est plus importante que le reste du joint d'étanchéité 20 formant ainsi une zone renforcée moins souple que la charnière 22 et la lèvre d'étanchéité 24. Cette portion courbée 23 est positionnée entre la charnière 22 et la lèvre d'étanchéité 24.

Cette portion courbée 23 et épaisse, que l'on désignera par le terme talon dans la suite de la description, forme une boursouflure, ou un bourrelet, entre la charnière 22 et la lèvre d'étanchéité 24 du joint d'étanchéité 20. Le talon 23 a pour but de rigidifier la base de la lèvre d'étanchéité 24 (qui est de nature relativement souple) de manière à empêcher son retournement en fonctionnement.

Le talon 23 permet également grâce à sa surépaisseur de former un appui, ou une butée, limitant la déformation du joint d'étanchéité 20 sous l'effet de la pression, notamment au niveau de la charnière 22.

Ces deux fonctions sont permises notamment par la forme en C du talon ainsi que par la surépaisseur de matière au niveau de cette portion.

Le talon 23 a pour avantage de venir « brider » la souplesse générale du joint d'étanchéité 20, et notamment de la lèvre d'étanchéité 24. Ainsi, le joint d'étanchéité 20 présente une souplesse suffisante au niveau de la lèvre d'étanchéité 24 garantissant une bonne étanchéité dans les conditions sévères d'utilisation d'une turbomachine, tout en assurant une rigidité suffisante à la base de la lèvre d'étanchéité 24 pour éviter une déformation trop importante du joint d'étanchéité 20 sous pression ainsi qu'un retournement de la lèvre d'étanchéité 24 sous un débit de décharge important.

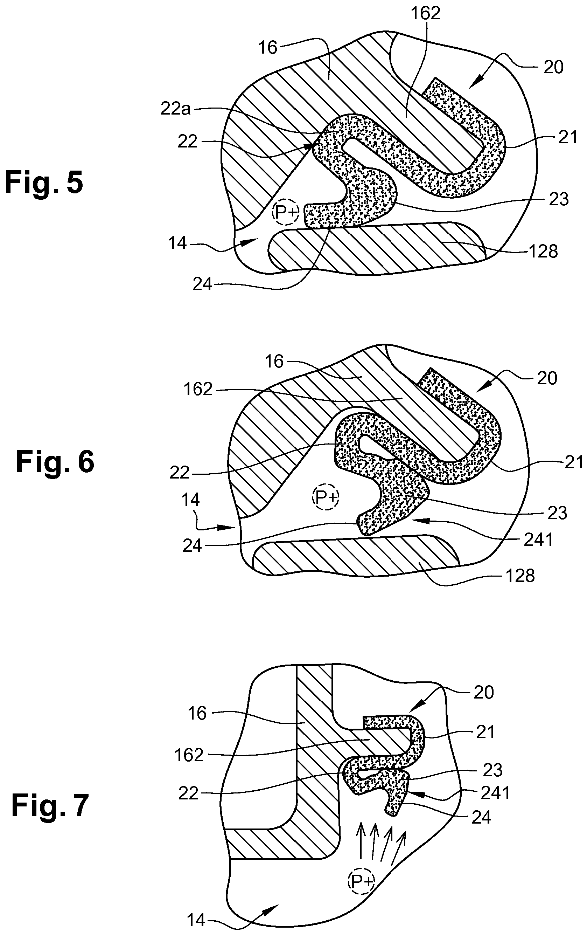

Les figures 5 à 7 représentent différentes vues en coupe illustrant le comportement du joint d'étanchéité 20 selon l'invention en situation.

La figure 5 illustre le comportement du joint d'étanchéité selon l'invention en position de fermeture de l'orifice 14 d'entrée d'air de décharge par la porte 16 lorsque la veine primaire est sous pression.

La figure 6 illustre le comportement du joint d'étanchéité 20 selon l'invention lors de l'ouverture de la porte 16 (et précisément en début d'ouverture).

La figure 7 illustre le comportement du joint d'étanchéité 20 selon l'invention lorsque la porte 16 est totalement ouverte et laisse passer une partie du flux primaire F1 de la veine primaire 124 dans le flux secondaire F2 de la veine secondaire 126.

Comme illustré à la figure 5, l'architecture particulière du joint d'étanchéité 20 selon l'invention permet d'optimiser le contact entre la lèvre d'étanchéité 24 et la virole annulaire interne 128 du carter intermédiaire 12 par une déformation maitrisée du joint d'étanchéité 20. Lors de la mise sous pression différentielle, illustrée par le symbole P+ sur les figures, la charnière 22 se déforme au niveau du point de pivot de la première portion 22a. En effet, sous l'effet de la pression supérieure de la veine primaire 124, la première portion 22a en forme de C de la charnière 22 se déforme, et se resserre de manière à modifier la position du talon 23 par rapport à sa position nominale, celui-ci se rapprochant de la première partie 21 en U. Le talon 23 vient ainsi s'appuyer sur la portion intérieure de la première partie 21 en forme de U, ce qui positionne la lèvre d'étanchéité 24 dans une position stable en contact avec la virole annulaire interne 128 du carter intermédiaire 12. L'augmentation de la pression dans la veine primaire 124 a même pour avantage de venir plaquer davantage la lèvre d'étanchéité 24 contre la virole annulaire interne 128 du carter intermédiaire 12 augmentant ainsi l'étanchéité au niveau de l'orifice 14. Le talon 23 qui présente une surépaisseur plus importante que l'espace de fuite entre la porte 16 et la virole annulaire interne 128 du carter intermédiaire 12 forme ainsi avantageusement un bouchon. Les dimensions du talon 23 sont déterminées de manière à maitriser la déformation du joint d'étanchéité 20 au niveau de la charnière 22, et ainsi garantir la position de la lèvre d'étanchéité 24 de manière répétable pour assurer une étanchéité optimale lors de la mise sous pression.

Lors de l'ouverture de la porte 16, comme illustré à la figure 6, le joint d'étanchéité 20 assure une étanchéité jusqu'à une certaine inclinaison de la porte 16, par exemple jusqu'à une inclinaison inférieure à 0,5°, entre sa position fermée initiale et le début de son pivotement, par le maintien de l'appui de la lèvre d'étanchéité 24 contre la paroi du carter intermédiaire 12. La position et la forme de la lèvre d'étanchéité 24 sont assurées pendant cette phase par l'appui généré au niveau du talon 23 sous l'effet de la différence de pression entre les enceintes. Lorsque la pression de contact générée par la lèvre d'étanchéité 24 devient inférieure à la pression de la veine primaire, le joint d'étanchéité 20 permet de réaliser une décharge progressive, et non brutale, de la veine primaire en fonction de l'inclinaison de la porte 16, car il n'y a pas de retournement de la lèvre d'étanchéité 24. Le réglage de la zone dite morte située entre la position fermée initiale et le début du pivotement de la porte 16 est réalisé en ajustant l'épaisseur du talon 23, et donc la position de la lèvre d'étanchéité 24, de sorte qu'il est possible de modifier l'angle d'inclinaison minimum pour obtenir un début de débit de fuite.

En position d'ouverture totale de la porte 16 comme représentée à la figure 7, le talon 23 est maintenu en contact contre la première partie 21 en U sous l'effet du débit de décharge illustré par les flèches au niveau de l'orifice 14. De par les dimensions de la lèvre d'étanchéité 24 et par la présence du talon 23 limitant la déformation de la lèvre d'étanchéité 24, la lèvre d'étanchéité 24 reste en place et ne se retourne pas comme il a pu être constaté sur les joints à lèvre de l'état de la technique. Ainsi, le joint d'étanchéité 20 selon l'invention reste intègre, et l'étanchéité est assurée lors des cinématiques d'ouverture/fermeture suivantes sans perte d'efficacité et sans détérioration du joint d'étanchéité 20 lors des différentes fermetures.

Le joint d'étanchéité 20 selon l'invention est réalisé en matériau élastomère, par exemple en silicone. Il peut être renforcé sur au moins une partie par des fibres dans sa structure interne, par exemple par des fibres de verre tissées ou non. Avantageusement, le joint d'étanchéité 20 est renforcé au niveau de la première partie 21 en forme de U. Avantageusement, le joint d'étanchéité 20 est renforcé au niveau de la première partie 21 en forme de U par un tissu de fibres de verre ou de polyester.

De manière à minimiser les frottements de la lèvre d'étanchéité 24 lors de la fermeture et ainsi éviter sa dégradation lors des différentes cinématiques d'ouverture/fermeture, la lèvre d'étanchéité 24 présente une surface de contact 241 présentant un faible coefficient de frottement. Avantageusement, on applique sur la surface 241 destinée à être en contact avec le carter intermédiaire 12 des moyens pour minimiser le coefficient de frottement. Avantageusement, la lèvre d'étanchéité 24 présente un tissu antifriction ménagé au niveau de la surface de contact 241 destinée à être en contact avec le carter intermédiaire 12, comme par exemple un tissu antifriction réalisé à partir de fibres en polyester ou en méta-aramide.

Le joint d'étanchéité 20 selon l'invention permet de minimiser la zone morte précitée de sorte qu'une modification angulaire au-delà de 0,5° de l'ouverture de la porte 16 permet de modifier le débit de décharge de la veine primaire. Ainsi, le joint d'étanchéité selon l'invention permet de réaliser un pilotage fin des vannes de décharge 10.

Le joint d'étanchéité 20 selon l'invention permet également de réaliser une décharge progressive et régulière, ce qui facilite le pilotage des vannes de décharge 10.

L'invention n'est pas limitée au mode de réalisation précédemment décrit en référence aux figures et des variantes pourraient être envisagées sans sortir du cadre des revendications.

## Revendications

1. Joint d'étanchéité (20) configuré pour être monté sur un premier organe de turbomachine (100), tel qu'une porte (16) d'une vanne de décharge (10), et pour venir en appui contre un deuxième organe (11, 12, 128) de la turbomachine, tel qu'un moyeu (11) de carter intermédiaire (12), ledit joint d'étanchéité étant **caractérisé en ce qu'**il comporte :
- des moyens d'accroche (21) pour monter ledit joint sur ledit premier organe présentant une forme générale en U;
- une lèvre d'étanchéité (24) assurant une étanchéité à l'air par contact et destinée à venir en appui contre ledit deuxième organe (11, 12, 128) ;
- des moyens anti-retournement (23) de ladite lèvre d'étanchéité (24) renforçant la rigidité du joint d'étanchéité (20) à la base de la lèvre d'étanchéité (24)
- une charnière (22), présentant une portion courbée (22a) avec une forme générale en C et positionnée entre les moyens d'accroche (21) et les moyens anti-retournement (23) ladite portion courbée (22a) étant configurée pour se déformer et modifier la position relative des moyens anti-retournement (23) lorsque le joint d'étanchéité (20) est soumis à une pression d'air, la forme générale en C ayant un sens de la courbure est inversé par rapport aux moyens d'accroche (21).

2. Joint d'étanchéité (20) selon la revendication 1 **caractérisé en ce que** les moyens anti-retournement (23) forment une butée pour limiter la déformation élastique de la portion courbée (22a) de la charnière (22) lorsque le joint d'étanchéité (20) est soumis à une pression d'air.

3. Joint d'étanchéité (20) selon l'une des revendications 1 à 2 **caractérisé en ce que** les moyens anti-retournement (23) sont formés par un bourrelet de matière.

4. Joint d'étanchéité (20) selon l'une des revendications 1 à 3 **caractérisé en ce que** les moyens d'accroche (21) pour monter ledit joint sur ledit premier organe comporte des fibres de renforcement enrobées d'un matériau élastomère.

5. Joint d'étanchéité (20) selon l'une des revendications 1 à 4 **caractérisé en ce que** la lèvre d'étanchéité (24) est revêtue d'un tissu antifriction.

6. Porte (16) de vanne de décharge (10) comportant un bord périphérique (162), **caractérisée en ce qu'**elle comporte un joint d'étanchéité (20) selon l'une des revendications précédentes monté sur ledit bord périphérique (162) via les moyens d'accroche (21).

7. Vanne de décharge (10) **caractérisée en ce qu'**elle comporte une porte (16) selon la revendication précédente, ladite porte (16) étant pivotante autour d'un axe de rotation entre une position d'obturation d'un orifice (14) de passage d'air et une position d'ouverture de cet orifice (14).

8. Carter intermédiaire (12) de turbomachine (100) comportant une pluralité de vanne de décharge (10) selon la revendication précédente assurant l'étanchéité au niveau d'une pluralité d'orifice (14) de passage d'air.

9. Turbomachine (100) **caractérisée en ce qu'**elle comporte un compresseur basse-pression (112), un compresseur haute-pression (114) et un carter intermédiaire (12) selon la revendication précédente positionné longitudinalement entre le compresseur basse-pression (112) et le compresseur haute-pression (114).

## Patentansprüche

1. Dichtung (20), die so ausgebildet ist, dass sie an einem ersten Bauteil einer Turbomaschine (100), wie beispielsweise einer Klappe (16) eines Überströmventils (10) montiert werden kann, und an einem zweiten Bauteil (11, 12, 128) der Turbomaschine, wie beispielsweise einer Nabe (11) eines Zwischengehäuses (12) anliegt, wobei die Dichtung **dadurch gekennzeichnet ist, dass** sie umfasst:
- Befestigungsmittel (21) zur Montage der Dichtung an dem ersten Bauteil, die eine allgemeine U-Form aufweisen;
- eine Dichtlippe (24), die durch Kontakt eine Luftdichtheit gewährleistet und dazu bestimmt ist, an dem zweiten Bauteil (11, 12, 128) anzuliegen;
- Umkehrschutzmittel (23) für die Dichtlippe (24), die die Steifigkeit der Dichtung (20) an der Basis der Dichtlippe (24) verstärken;
- ein Scharnier (22), das einen gekrümmten Abschnitt (22a) mit einer allgemeinen C-Form aufweist und zwischen den Befestigungsmitteln (21) und den Umkehrschutzmitteln (23) positioniert ist, wobei der gekrümmte Abschnitt (22a) so ausgebildet ist, dass er sich verformt und die relative Position der Umkehrschutzmittel (23) verändert, wenn die Dichtung (20) einem Luftdruck ausgesetzt ist, wobei die allgemeine C-Form eine Krümmungsrichtung aufweist, die im Verhältnis zu den Befestigungsmitteln (21) umgekehrt ist.

2. Dichtung (20) nach Anspruch 1, **dadurch gekennzeichnet, dass** die Umkehrschutzmittel (23) einen Anschlag bilden, um die elastische Verformung des gekrümmten Abschnitts (22a) des Scharniers (22) zu begrenzen, wenn die Dichtung (20) einem Luftdruck ausgesetzt ist.

3. Dichtung (20) nach einem der Ansprüche 1 bis 2, **dadurch gekennzeichnet, dass** die Umkehrschutzmittel (23) durch einen Materialwulst gebildet sind.

4. Dichtung (20) nach einem der Ansprüche 1 bis 3, **dadurch gekennzeichnet, dass** die Befestigungsmittel (21) zur Montage der Dichtung an dem ersten Bauteil mit einem Elastomermaterial ummantelte Verstärkungsfasern umfassen.

5. Dichtung (20) nach einem der Ansprüche 1 bis 4, **dadurch gekennzeichnet, dass** die Dichtlippe (24) mit einem reibungsmindernden Gewebe beschichtet ist.

6. Klappe (16) eines Überströmventils (10) mit einem Umfangsrand (162), **dadurch gekennzeichnet, dass** sie eine Dichtung (20) gemäß einem der vorstehenden Ansprüche aufweist, die über die Befestigungsmittel (21) an dem Umfangsrand (162) angebracht ist.

7. Überströmventil (10), **dadurch gekennzeichnet, dass** es eine Klappe (16) nach dem vorstehenden Anspruch aufweist, wobei die Klappe (16) um eine Drehachse zwischen einer Position zum Verschließen einer Luftdurchlassöffnung (14) und einer Position zum Öffnen dieser Öffnung (14) schwenkbar ist.

8. Zwischengehäuse (12) einer Turbomaschine (100), das eine Vielzahl von Überströmventilen (10) nach dem vorstehenden Anspruch aufweist, die die Dichtheit an einer Vielzahl von Luftdurchlassöffnungen (14) gewährleisten.

9. Turbomaschine (100), **dadurch gekennzeichnet, dass** sie einen Niederdruckverdichter (112), einen Hochdruckverdichter (114) und ein Zwischengehäuse (12) nach dem vorstehenden Anspruch umfasst, das in Längsrichtung zwischen dem Niederdruckverdichter (112) und dem Hochdruckverdichter (114) angeordnet ist.

## Claims

1. Airtight seal (20) configured to be mounted on a first turbomachine member (100), such as a door (16) of a bleed valve (10), and to bear against a second member (11, 12, 128) of the turbomachine, such as a hub (11) of an intermediate casing (12), said airtight seal being **characterised in that** it comprises:
- retaining means (21) for mounting said seal on said first member has a general U shape;
- a sealing lip (24) ensuring airtightness through contact and intended to bear against said second member (11, 12, 128);
- anti-return means (23) for said sealing lip (24) reinforcing the rigidity of the airtight seal (20) at the base of the sealing lip (24)
- a hinge (22) having a curved portion (22a) with a general C shape and positioned between the retaining means (21) and the anti-return means (23) said curved portion (22a) being configured to deform and modify the relative position of the anti-return means (23) when the airtight seal (20) is subjected to air pressure, the general C shape means that the direction of curvature is reversed with respect to the retaining means (21).

2. Airtight seal (20) according to claim 1 **characterised in that** the anti-return means (23) form a stop to limit the elastic deformation of the curved portion (22a) of the hinge (22) when the airtight seal (20) is subjected to air pressure.

3. Airtight seal (20) according to one of claims 1 to 2 **characterised in that** the anti-return means (23) are formed by a bead of material.

4. Airtight seal (20) according to one of claims 1 to 3 **characterised in that** the retaining means (21) for mounting said seal on said first member comprise reinforcement fibres coated with an elastomeric material.

5. Airtight seal (20) according to one of claims 1 to 4 **characterised in that** the sealing lip (24) is covered with an antifriction fabric.

6. Door (16) of a bleed valve (10) comprising a peripheral edge (162), **characterised in that** it comprises an airtight seal (20) according to one of the preceding claims mounted on said peripheral edge (162) via the retaining means (21).

7. Bleed valve (10) **characterised in that** it comprises a door (16) according to the preceding claim, said door (16) being pivoting around an axis of rotation between a position of sealing off an airway orifice (14) and a position of opening this orifice (14).

8. Intermediate casing (12) of a turbomachine (100) comprising a plurality of bleed valves (10) according to the preceding claim ensuring airtightness at the level of a plurality of airway orifices (14).

9. Turbomachine (100) **characterised in that** it comprises a low pressure compressor (112), a high pressure compressor (114) and an intermediate casing (12) according to the preceding claim positioned longitudinally between the low pressure compressor (112) and the high pressure compressor (114).
